# EUROPEAN PATENT APPLICATION

(11) **EP 2 797 329 A1**
(43) Date of publication of application: **29.10.2014**
(21) Application number: 14165537.3
(22) Date of filing: 23.04.2014
(51) Int. Cl.: H04N 21/258, H04N 21/2743, H04N 21/4227, H04N 21/475, H04N 21/4788, H04N 21/422

(54) **Effortless linking and viewing for cloud-based sharing of media on remote viewing devices and a system thereof**

(30) Priority: 24.04.2013 US 201361815640 P; 21.04.2014 US 201414257878
(71) Applicant: Synchronoss Technologies, Inc., Bridgewater, NJ 08807 (US)
(72) Inventor: Allen, Aristotle B., Breiningsville, PA Pennsylvania 18031 (US); Manzor, David, Dublin (IE); Press, Miguel, 51030-065 Boa Viagem (BR)
(74) Representative: Goddar, Heinz J.

(57) **Abstract**

Embodiments of the present invention relate to linking a viewing device, such as a TV, to a user's account in a server for purposes of sharing content via the TV. A viewing application on the TV allows the TV to couple with the server, which generates a pin to be displayed on the TV. Upon the user entering the pin that is displayed on the TV in a mobile application of a mobile device, the server links the TV to the account the mobile device is linked to. The user shares content on the TV by sending commands from the mobile device to the server, which renders a screen on the TV already being viewed by the audience. Each command goes through the server rather than peer to peer. Any content that is stored in the cloud can be shared even if it is not on the mobile device.

## Description

### Related Applications

This application claims benefit of priority under 35 U.S.C. section 119(e) of the copending United States Provisional Patent Application Serial No. 61/815,640 filed April 24, 2013, entitled "Mobile Applications," which is hereby incorporated by reference in its entirety.

### Field of Invention

The present invention relates to media sharing. More particularly, the present invention relates to effortless linking and viewing for cloud-based sharing of media on remote viewing devices and a system thereof.

### Background of the Invention

Solutions exist that allow media on a device to be shared with other devices. One prior art solutions uses a peer to peer technology, such as DNLA (Digital Living Network Alliance) or AirPlay. This prior art solution, thus, requires a sending device and a receiving/viewing device to be on the same network. Since DLNA and AirPlay are not compatible as they are competing standards and either the DNLA protocol or the AirPlay protocol must be implemented on both the sending device and the receiving/viewing device, a user must first decide which home entertainment platform to use.

Another prior art solution allows users to access cloud content on a viewing device, such as a smart TV, but control is performed via a TV remote control. While the TV remote control is relatively easy to use to simply hop from channel to channel, it is rather difficult to use when a user needs to interact with applications on the TV. This prior art solution requires a user to enter credentials on the TV. However, entering credentials, like user names and passwords, or typing web addresses, or navigating through content is cumbersome and time-consuming as it can take minutes and minutes of time to type anything into the TV.

A lot of work is required for users to enjoy streaming experience provided by these prior art solutions.

### Brief Summary of the Invention

Embodiments of the present invention relate to linking a viewing device, such as a smart TV, to a user's media account in a cloud server for purposes of sharing content, such as media, via the TV. The content can be public or private. Private content requires access tokens to display the content on the viewing device. A viewing application on the TV allows the TV to communicatively couple with the server, which generates a pin to be displayed on the TV. Upon the user entering the pin that is displayed on the TV in a mobile application of a mobile device, the server links the TV to the account that the mobile device is linked to. The user is able to share content on the TV by sending commands from the mobile device to the server, which renders a screen on the TV already being viewed by the audience. The user uses the mobile device as a remote. Each command goes through the server rather than peer to peer. Any content that is stored in the cloud can be shared even if it is not on the mobile device.

In one aspect, a non-transitory computer-readable medium is provided. The non-transitory computer-readable medium stores instructions that, when executed by a computing device, cause the computing device to perform a method. The method includes enabling establishment of a three-way communication among the computing device, a viewing device and a server. Typically, the computing device and the viewing device are end-user devices and the server is located in a cloud. The computing device can be a mobile device, such as a smart phone or a table. The viewing device can be a smart TV or a device with a web browser. Other view devices are contemplated.

In some enibodiments, the enabling includes receiving an user-entered input and transmitting the user-input to the server to be compared with a server-generated pairing code by the server.

The method also includes displaying personal contents stored by the server.

The method also includes allowing an user to select at least one of the displayed contents on the computing device such that the at least one displayed content is shown on the viewing device.

In another aspect, a non-transitory computer-readable medium is provided. The non-transitory computer-readable medium stores instructions that, when executed by a computing device, cause the computing device to perform a method. The method includes generating a pairing code to be displayed on a communicatively coupled viewing device.

The method also includes, upon receiving an input entered by an user on a communicatively coupled mobile device that matches the pairing code, establishing a three-way communication among the computing device, the viewing device and the mobile device. In some embodiments, the establishing includes linking the viewing device to the same account that the mobile device is linked to.

The method also includes transmitting at least one personal content that is selected by the user on the mobile device to be displayed on the viewing device.

In some embodiments, the method also includes receiving a command from a remote control for the viewing device to control what is displayed on the viewing device.

In yet another aspect, a method of viewing stored contents is provided. The method includes a server generating a pairing code upon communicatively coupling with a viewing device, the viewing device displaying the pairing code, the mobile device transmitting an user-entered input to the server, the server comparing the pairing code with the user-entered input, and based on the comparison, the server establishing a three-way communication among the server, the viewing device and the mobile device.

The method also includes the mobile device transmitting a selection to the server. The selection can be a folder, a photo, a video or a song.

The method also includes the viewing device displaying data corresponding to the selection. The data can be a photo, a video or a song. Alternatively or in addition to, the data can also include a thumbnails strip of contents in a folder.

In some embodiments, the method also includes the mobile device transmitting another selection to the server, and the viewing device displaying data corresponding to the another selection.

In yet another aspect, a system of viewing remotely stored contents is provided. The system includes at least two-end user devices including a mobile device and a first viewing device. The system also includes a server configured to communicatively couple the mobile device with the first viewing device by linking the first viewing device to an account that the mobile device is linked to such that at least one command sent from the mobile device instructs the server to render a display to be shown on the first viewing device.

In some embodiments, the mobile device behaves as a controller for what is being displayed on the first viewing device.

In some embodiments, contents stored by the server are displayed on the mobile device, and the display includes at least one of the contents. The display can include a content that is stored by the server but is not on the mobile device.

In some embodiments, the server is configured to generate a pairing code, and the first viewing device is linked to the account via the pairing code. The link between the account and the first viewing device can expire after a predetermined amount of time. Alternatively or in addition to, expiration of the link between the account and the first viewing device is requested from the mobile device. Alternatively or in addition to, expiration of the link between the account and the first viewing device is pre-empted by linking the account to a second viewing device.

In some embodiments, the system also includes a view application, a mobile application and a server-side application. The viewing application is on the first viewing device. When the viewing application is executed, the viewing application causes the first viewing device to communicatively couple with the server and to display data received from the server;

The mobile application is on the mobile device. When the mobile application is executed, the mobile application causes the mobile device to communicatively couple with the server and to send at least one command to the server.

The server-side application is on the server. When the server-side application is executed, the server-side application causes the server to generate a pairing code and to render, according to the at least one command, a display to be shown within the viewing application.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 illustrates an exemplary system according to an embodiment of the present invention.
FIG. 2 illustrates an exemplary method performed by a server according to an embodiment of the present invention.
FIG. 3 illustrates an exemplary method performed by a mobile device according to an embodiment of the present invention.
FIG. 4 illustrates a block diagram of an exemplary computing device according to an embodiment of the present invention.
FIG. 5 illustrates an exemplary method of viewing stored contents according to an embodiment of the present invention.
FIGS. 6-34 illustrate an exemplary graphical flow according to an embodiment of the present invention.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention relate to linking a viewing device, such as a smart TV, to a user's media account in a cloud server for purposes of sharing content, such as media, via the TV. The content can be public or private. Private content requires access tokens to display the content on the viewing device. A viewing application on the TV allows the TV to communicatively couple with the server, which generates a pin to be displayed on the TV. Upon the user entering the pin that is displayed on the TV in a mobile application of a mobile device, the server links the TV to the account that the mobile device is linked to. The user is able to share content on the TV by sending commands from the mobile device to the server, which renders a screen on the TV already being viewed by the audience. The user uses the mobile device as a remote. Each command goes through the server rather than peer to peer. Any content that is stored in the cloud can be shared even if it is not on the mobile device.

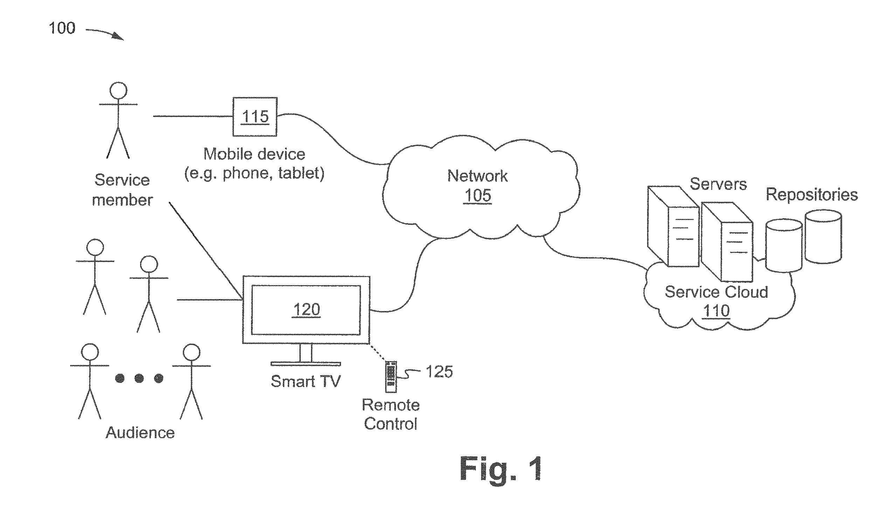

FIG. 1 illustrates an exemplary system 100 according to an embodiment of the present invention. The system 100 typically includes a network 105 (e.g., the Internet), a service cloud 110 and end-user devices 115, 120 that are communicatively coupled with the network 105. A server(s) in the cloud 110 is configured to provide service to its service members. For example, the server is able to store a service member's mobile data received from the end-user device 115 and/or contents uploaded from other sources, such as a desktop computer (not illustrated), in one or more repositories. The one or more repositories can be located in the cloud 110, as illustrated in FIG. 1, although the repositories can be located elsewhere in the system 100. The mobile data that is stored in the one or more repositories can include photos, videos, call history, music, documents, and text messages. Other mobile data, such mobile address books, can also be stored.

A service member or subscriber typically has a service account in the cloud 110 and uses the end-user device 115 to access the service provided by the server. The account allows the subscriber to set his/her preferences, such as frequency of notifications and other settings. The subscriber is typically able to access the account via a web page or a client program, such as a mobile application, installed on the end-user device 115. Although the end-user device 115 is depicted as a mobile phone in FIG. 1, the end-user device 115 can be a tablet, a laptop or any suitable mobile device. The end-user device 120 typically has a larger viewing screen than that of the end-user device 115. For example, the end-user device 120 can be a smart TV, although the end-user device 120 can be any suitable viewing device, such as a monitor or a computing device with a web browser. A remote control 125 is typically configured to control the viewing device 120.

The viewing device 120 typically includes a viewing application. The viewing application can be downloaded and installed by an user, or can be pre-installed by a manufacturer or a distributer. When the viewing application is launched on the viewing device 120, the viewing application attempts to establish communication with the server. Upon establishing communication with the server, the server generates a pairing code to be shown within the viewing application on the viewing device 120. Briefly, the pairing code is used to link the viewing device 120 to an account in the cloud 110. In some embodiments, the pairing code is unique and can include any number of typographical symbols, numbers and letters. After the viewing device 120 is linked to the account, the viewing application continuously communicates with the server in the cloud 110, until the link is expired, to receive data to be displayed within the viewing application. The data received from the server can be any of the stored personal contents associated with the account, including but not limited to photos, videos and music.

The mobile device 115 typically includes the mobile application. The mobile application can be downloaded and installed by the service member, or can be pre-installed by a manufacturer, a distributer or a cellular carrier. The mobile application, when launched, provides the service member with a login user interface to access his/her account in the cloud 110. After the service member is authenticated, the mobile device 115 is linked to the account. The mobile application provides the service member with a plurality of user interfaces that allow the service member to store data from the mobile device 115 to his/her account, to access data from his/her account and to enable communication with an end-user device, such as the viewing device 120. In particular, the mobile application presents the service member with an user interface to enter the pairing code that is displayed on the viewing device 120. The mobile application enters TV mode after the viewing device 120 is linked to the account. The mobile application, while in the TV mode, provides the service member with a plurality of user interface to share any of his/her personal contents stored by the server via the viewing device 120. In some embodiments, the TV mode offers one or more views of the service member's contents that are remotely stored in the cloud 110. The service member is able to browse through the stored contents and to select those that the service member wants to display on the viewing device 120 to share with an audience. The service member can be part of the audience.

The server uses the generated pairing code to communicatively couple the mobile device 115 with the viewing device 120. In particular, the server links the viewing device 120 to the service member's account such that a command sent from the mobile device 115 to the server instructs the server to render a display to be shown on the viewing device 120. The service member's personal contents associated with the account that are stored by the server are displayed on the mobile device 115. The rendered display shown on the viewing device 120 includes at least one of the contents that is selected by the service member. In some embodiments, the at least one content is not on the mobile device 115. The mobile device 115 can behave as a controller for what is being displayed on the viewing device 120. The server is able to stream any of the stored contents associated with the service member's account from the one or more repositories to the viewing device 120, based on selections made on the mobile device 115. However, it is contemplated that the remote control 125 can also be used to control what is being displayed on the viewing device 120, such as to navigate left and right and to select.

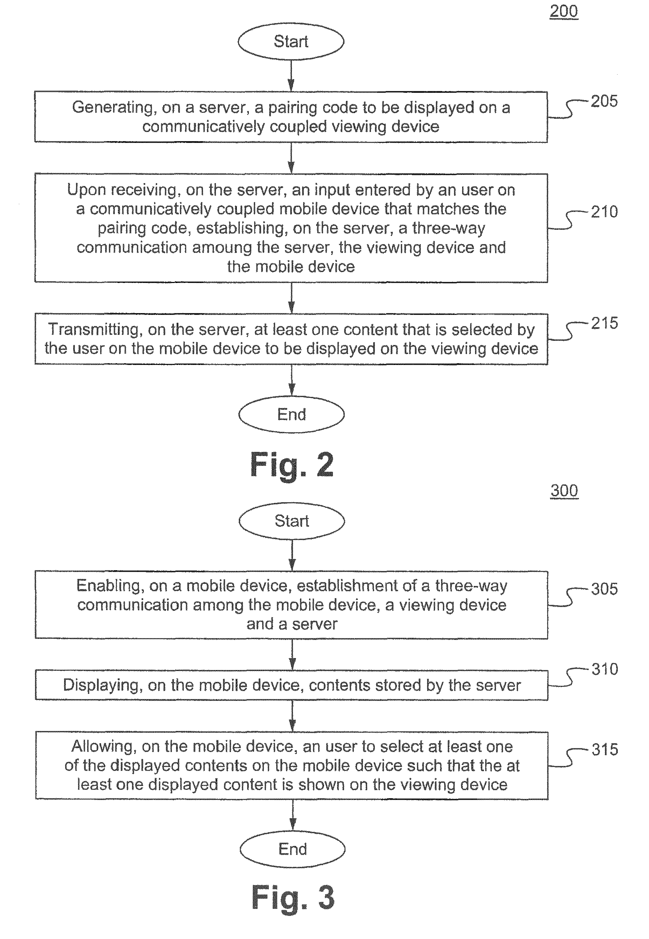

FIG. 2 illustrates an exemplary method 200 according to an embodiment of the present invention. The server in the cloud 110 of FIG. 1 typically performs the method 200. The method 200 starts at a step 205, where the server generates a pairing code to be displayed on the communicatively coupled viewing device 120 of FIG. 1. Typically, the pairing code is generated when the communication between the server and the viewing device 120 is established. The communication between the server and the viewing device 120 can be established by launching the viewing application on the viewing device 120.

At a step 210, upon receiving an input entered by the service member on the communicatively coupled mobile device 115 of FIG. 1 that matches the pairing code, the server establishes a three-way communication among the server, the viewing device 120 and the mobile device 115. Typically, the mobile device 115 is linked to the account upon the service member being authenticated. Using the pairing code, the server links the viewing device 120 to the same account that the mobile device 115 is linked to. The mobile device 115 is thus linked to the account prior to the viewing device 120 being linked to the account.

At a step 215, the server transmits at least one content that is selected by an audience member, such as the service member or another user, on the mobile device 115 to be displayed on the viewing device 120. The at least one content is typically associated with the service member's account and is thus personal to the service member. After the method 215, the method 200 ends.

FIG. 3 illustrates an exemplary method 300 according to an embodiment of the present invention. The mobile device 115 of FIG. 1 typically performs the method 300. The method 300 starts at a step 305, where the mobile device 115 enables establishment of a three-way communication among the mobile device 115, the viewing device 120 and the server of FIG. 1.

Typically, the mobile device 115 receives an user-entered input and transmits the user-input to the server to be compared with the pairing code by the server.

At a step 310, the mobile device 115 displays contents stored by the server. The stored contents are typically associated with the service member's account and are thus personal to the service member. In some embodiments, the contents displayed on the mobile device 115 are visually represented in different file types than of that stored by the server.

At a step 315, the mobile device allows the user to select at least one of the displayed contents on the mobile device 115 such that the at least one displayed content is shown on the viewing device 120. After the step 315, the method 300 ends.

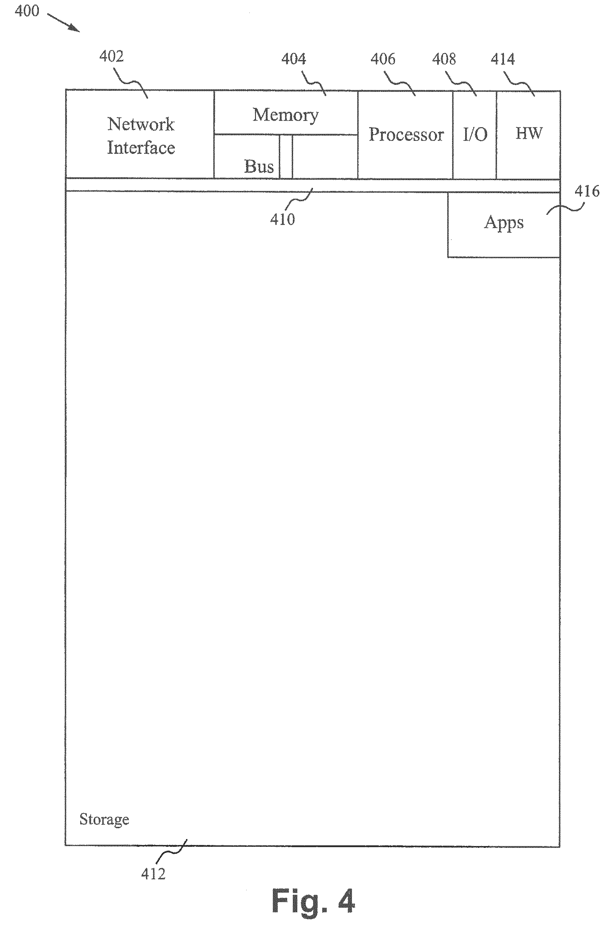

FIG. 4 illustrates a block diagram of an exemplary computing device 400 according to an embodiment of the present invention. The computing device 400 is able to be used to acquire, cache, store, compute, search, transfer, communicate and/or display information. The server(s) in the cloud 110 and/or the end-user devices 115, 120 of the FIG. 1 can be similarly configured as the computing device 400.

In general, a hardware structure suitable for implementing the computing device 400 includes a network interface 402, a memory 404, processor(s) 406, I/O device(s) 408, a bus 410 and a storage device 412. The choice of processor 406 is not critical as long as a suitable processor with sufficient speed is chosen. In some embodiments, the computing device 400 includes a plurality of processors 406. The memory 404 is able to be any conventional computer memory known in the art. The storage device 412 is able to include a hard drive, CDROM, CDRW, DVD, DVDRW, flash memory card, RAM, ROM, EPROM, EEPROM or any other storage device. The computing device 400 is able to include one or more network interfaces 402. An example of a network interface includes a network card connected to an Ethernet or other type of LAN. The I/O device(s) 408 are able to include one or more of the following: keyboard, mouse, monitor, display, printer, modem, touchscreen, button interface and other devices. Application(s) 414, such as the Viewing application, the mobile application and the server-side application implementing the service discussed above, are likely to be stored in the storage device 412 and memory 404 and are processed by the processor 406. More or less components shown in FIG. 4 are able to be included in the computing device 400.

The computing device 400 can be a server or an end-user device. Exemplary end-user devices include, but are not limited to, a tablet, a mobile phone, a smart phone, a desktop computer, a laptop computer, a netbook, or any suitable computing device such as special purpose devices, including smart TVs, set top boxes and automobile consoles.

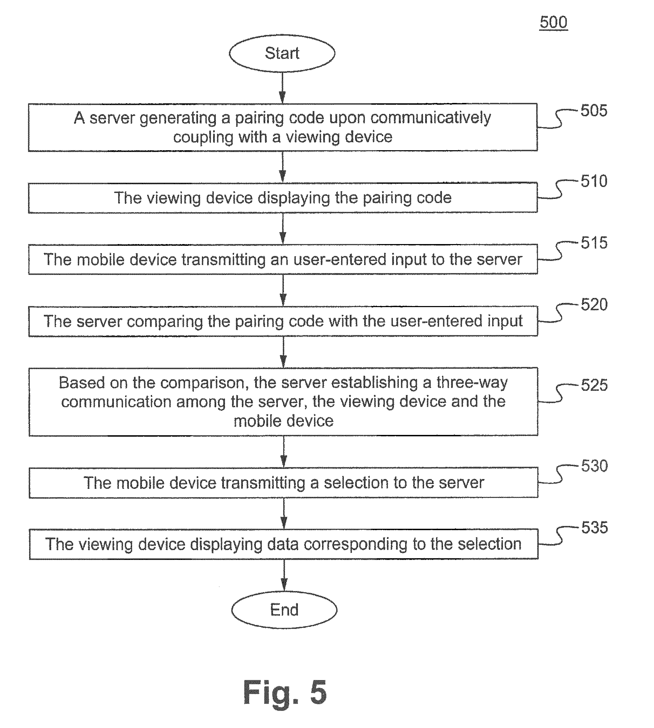

FIG. 5 illustrates an exemplary method 500 of viewing stored contents according to an embodiment of the present invention. The method 500 can be performed by the server, the mobile device 115 and the viewing device 120 of FIG. 1. The method 500 starts at a step 505, where the server generates a pairing code upon communicatively coupling with the viewing device 120. Typically, the viewing device 120 communicates with the server by launching the viewing application on the viewing device 120.

At the step 510, the viewing device 120 displays the pairing code received from the server. Typically, the pairing code is unique and can include any number of typographical symbols, numbers and letters.

At a step 515, the mobile device 115 transmits an user-entered input to the server. Typically, the user-entered input corresponds to (i.e., matches) the pairing code.

At a step 520, the server compares the pairing code with the user-entered input.

At a step 525, based on the comparison, the server establishes a three-way communication among the server, the viewing device 120 and the mobile device 115. Typically, the mobile device 115 is linked to the service member's account upon log in, and the viewing device 120 is linked to the user's account upon determining that the pairing code and the user-entered input matches.

At a step 530, the mobile device 115 transmits a selection to the server. For example, the selection can be a folder, a photo, a video or a song and is made on the mobile device 115. Alternatively, the selection can be any suitable file.

At a step 535, the viewing device 120 displays data corresponding to the selection. In some embodiments, the data being viewed on the viewing device 120 had been transcoded into a format which is viewable on the viewing device 120. The data can be stored content, such as a photo, a video or a song. In some embodiments, the data also includes a thumbnail strip of contents in a folder. The steps 530 and 535 can be repeated until occurrence of a predetermined event. The predetermined event can be that the link between the account and the viewing device 120 is disabled. After the step 535, the method 500 ends.

The link between the account and the viewing device 120 can be disabled in one of a plurality of manners. For example, the link can automatically expire or disable after a predetermined amount of time, such as 30 minutes or one hour. For another example, the link can automatically expire after a predetermined amount of time since the last share. For yet another example, the user can manually disable the link from the mobile application to unlink the viewing device 120 (e.g., expiration of the link can be requested from the mobile device 115). In some embodiments, the expiration of the link is pre-empted by linking the account with another viewing device. It is contemplated that link expiration is supported in several ways and is configurable.

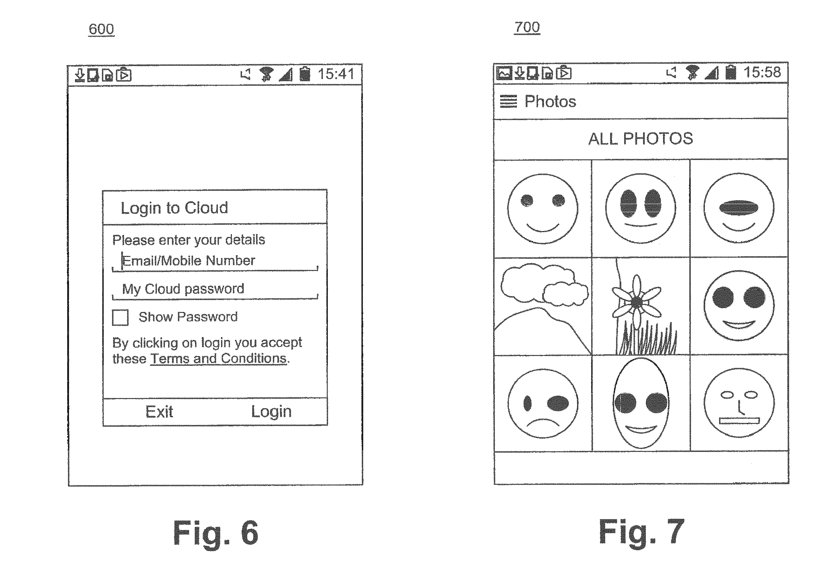

FIGS. 6-34 illustrate an exemplary graphical flow according to an embodiment of the present invention. It should be noted that screens shown in FIGS. 6-34 are only illustrative for purposes of discussion.

FIG. 6 illustrates an exemplary log in screen 600 when the mobile application is launched from the mobile device. The log in screen 600 includes a member identification (e.g., email address or a mobile number) field and a password field. These two fields are necessary to access the service member's account. After the service member is authenticated, a default landing screen is shown. In some embodiments, an exemplary default landing screen 700, as illustrated in FIG. 7, is All Photos.

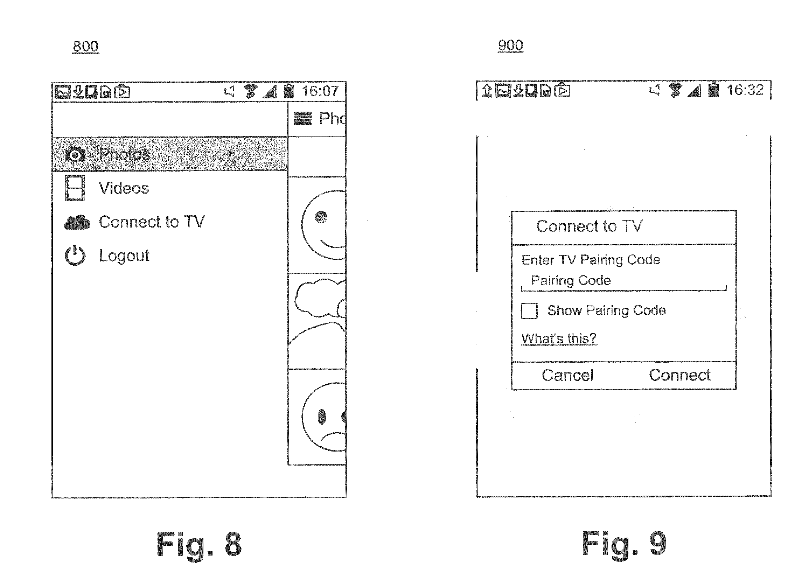

FIG. 8 illustrates an exemplary navigation menu screen 800. Upon logging in, the mobile application is not in TV mode. The navigation menu screen 800 includes menu items, such as Photos, Videos, Connect to TV, and Logout. The service member to able view contents (e.g., photos, videos) previously remotely stored by the server. While the service member is able to view the contents on the mobile device, these contents are not shared. The contents are typically personal to the service member.

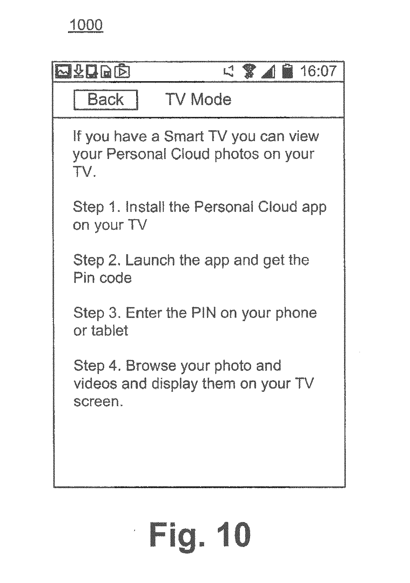

The service member is able to connect with a viewing device, such as a smart TV, by activating the Connect to TV menu item of FIG. 8. FIG. 9 illustrates an exemplary pairing screen 900. The pairing screen 900 includes a pairing code field. A "What's This?" link takes the service member to an exemplary information screen 1000 illustrated in FIG. 10. The information screen 1000 includes instructions to share stored contents on a viewing device.

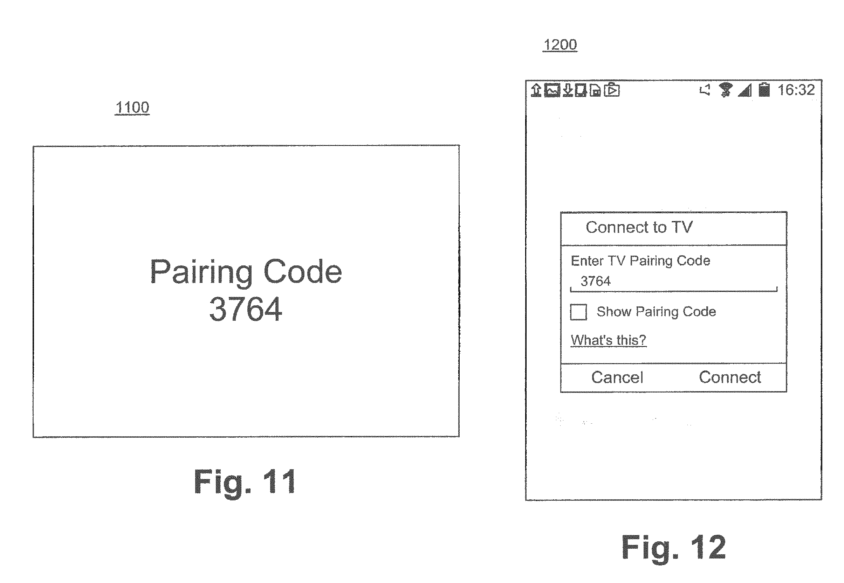

FIG. 11 illustrates an exemplary code screen 1100 when the viewing application is launched from the viewing device (e.g., the smart TV) and connected with the server. The server-generated pairing code is typically received from the server and displayed on the TV. The pairing code allows the TV to be linked to the same account that the mobile device is linked to.

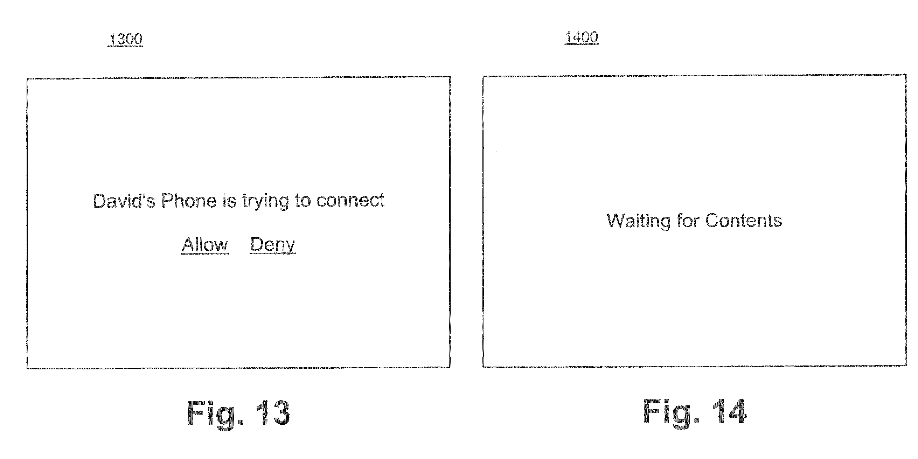

FIG. 12 illustrates an exemplary pairing screen 1200. As illustrated in FIG. 12, the pairing code is entered in the pairing code field of the pairing screen 1200. In some embodiments, after the Connect button in the pairing screen 1200 is activated, the viewing application on the TV informs the audience the service member's mobile device is trying to connect with the TV, as illustrated in an exemplary connecting screen 1300 of FIG. 13. In some embodiments, an audience member must activate "Allow" to proceed. The cursor focus can be on "Allow." Alternatively, the connection proceeds automatically within a predetermined amount of time, such as 30 seconds. The audience member can activate "Deny" to stop the connection. In some cases, the connecting screen 1300 is required if session hi-jacking is deemed a threat.

FIG. 14 illustrates an exemplary status screen 1400 displayed in the viewing application after the mobile device is connected with the viewing device. The status screen 1400 indicates that the TV application is waiting for contents from the server. The status screen 1400 is typically displayed when none of the stored contents have been selected for sharing.

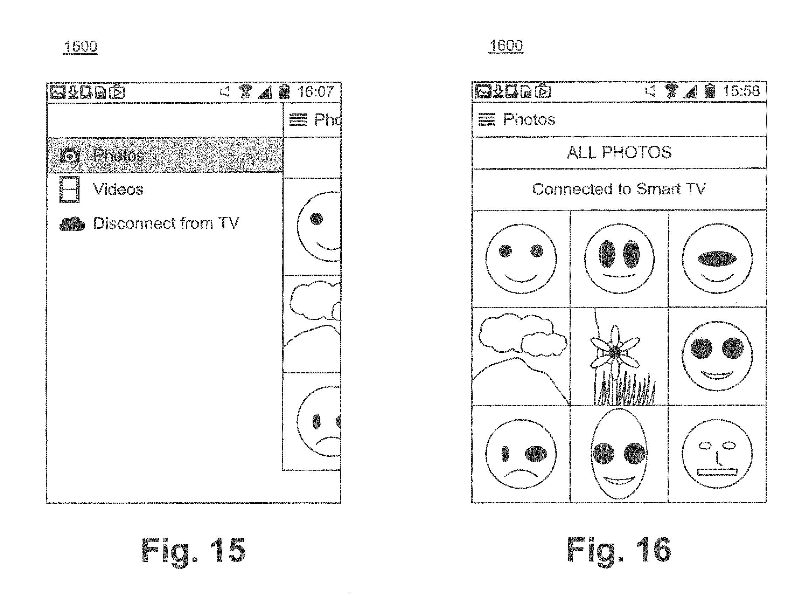

At this time, the mobile application is in TV mode. FIG. 15 illustrates an exemplary navigation menu screen 1500. The navigation menu screen 1500 includes menu items, such as Photos Videos, and Disconnect from TV. The service member cannot logout from the navigation menu screen 1500. To logout, the service member must first exit out of TV mode to return to the navigation menu screen 800. Alternatively, the navigation menu screen 1500 includes a Logout menu item. The service member is able to view contents (e.g., photos, videos) previously remotely stored by the server. The service member is able to share any of these contents via the TV.

For example, the service member is able to select the Photos menu item from the navigation menu screen 1500 of FIG. 15 to share photos. After the Photos menu item is selected, a default landing screen is shown. In some embodiments, an exemplary default landing screen 1600 is an All Photos view as illustrated in FIG. 16. The default landing screen 1600 includes a banner that indicates to the service member that the mobile application is connected with the TV. The service member is able to browse the photos as normal.

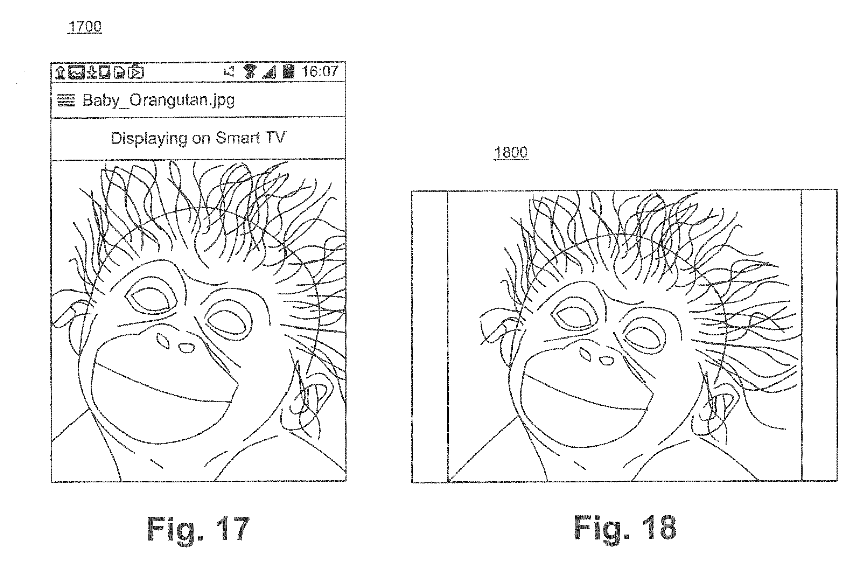

The service member is able to select one of the photos from the view, which is then displayed in large as illustrated in FIG. 17. The exemplary screen 1700 includes the displayed photo along with a banner that indicates to the service member that the photo is being displayed on the TV. FIG. 18 illustrates the corresponding photo displayed in the viewing application on the TV. If the service member swipes left or right on the screen 1700, the next photo displayed on the mobile device will be displayed on the TV. In some embodiments, the viewing application does not display a thumbnail strip of all photos.

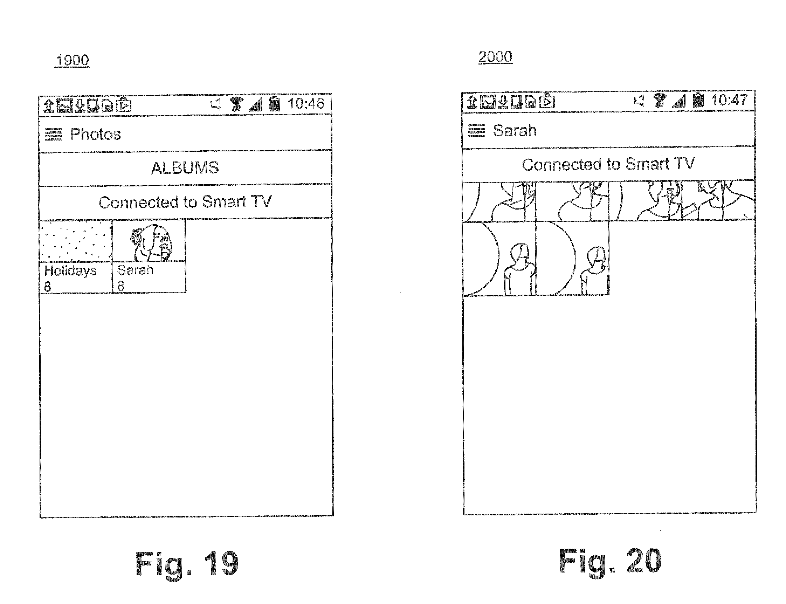

The service member is able to browse photo albums and select one to share. FIG. 19 illustrates an exemplary screen 1900 showing all of the service member's photo albums. The screen 1900 includes a banner that indicates to the service member that the mobile application is connected with the TV.

The service member is able to select one of the photo albums. After a photo album is selected, all photos in that album are shown in an exemplary screen 2000 of FIG. 20. The screen 200 includes a banner that indicates to the service member that the mobile application is connected with the TV.

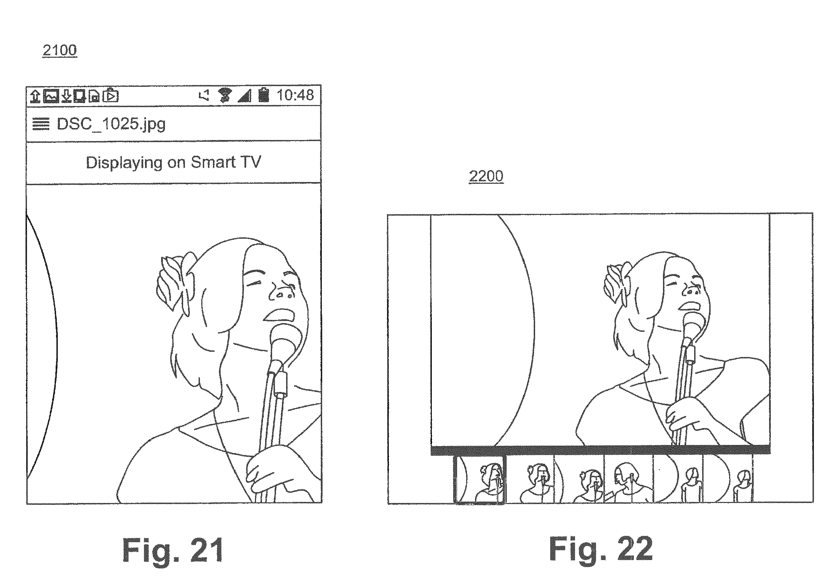

The service member is able to select one of the photos from the album, which is then displayed in large as illustrated in FIG. 21. The exemplary screen 2100 includes the displayed photo along with a banner that indicates to the service member that the photo is being displayed on TV. FIG. 22 illustrates the corresponding photo displayed in the viewing application on the TV. If the service member swipes left or right on the screen 2100, the next photo displayed on the mobile device will be displayed on the TV. In some embodiments, the viewing application also displays a thumbnail strip of all photos in the selected album. The photo or image which is being displayed in large is highlighted in the thumbnail strip. The thumbnail strip displays a list of n thumbnails which come after the large image (if the large image is the first in the album) or n images before and n images after the large image.

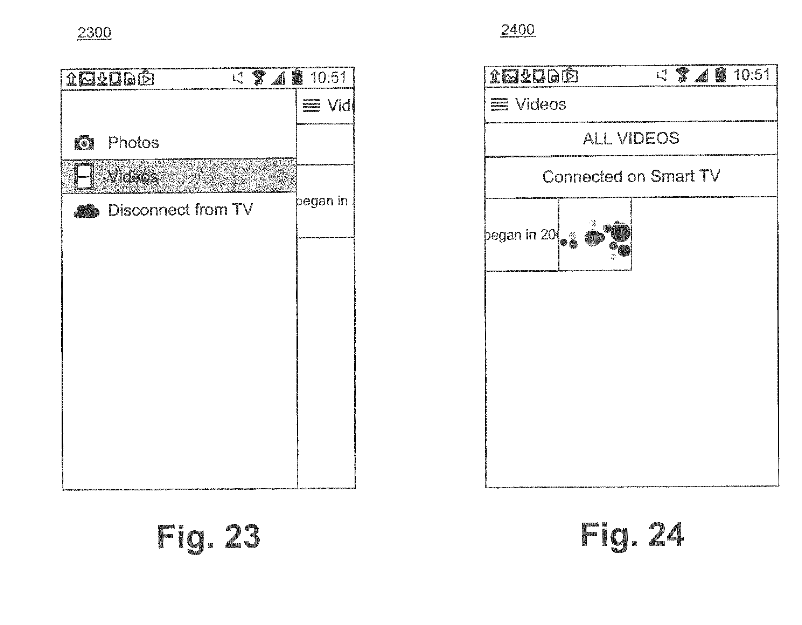

In addition to photos, the service member is able to select the Videos menu item of the navigation menu screen 2300 of FIG. 23 to share videos. The navigation menu screen 2300 is similarly configured as the navigation menu screen 1500 of FIG. 15. After the Videos menu item is selected, a default landing screen is shown. In some embodiments, an exemplary default landing screen 2400 is an All Videos view as illustrated in FIG. 24. The default landing screen 2400 includes a banner that indicates to the service member that the mobile application is connected with the TV. The service member is able to browse the videos as normal.

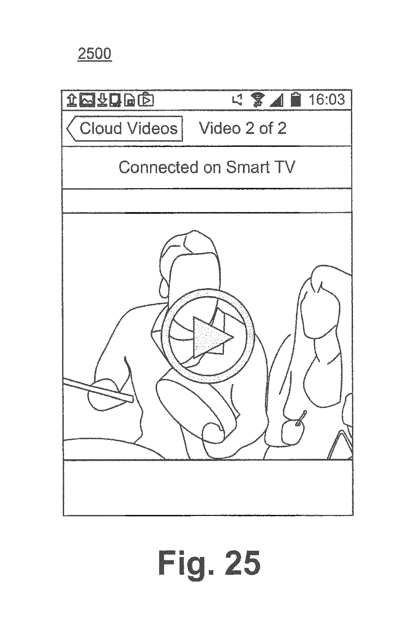

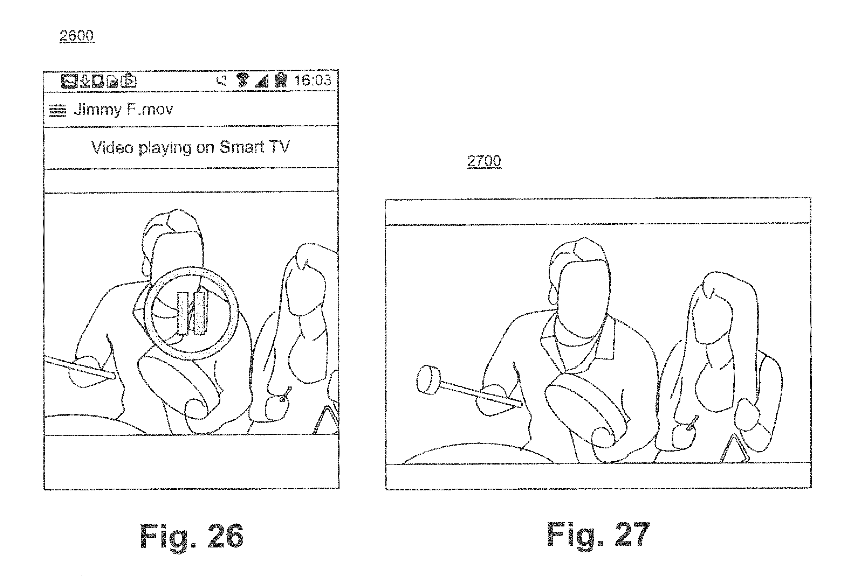

The service member is able to select one of the videos from the view, which is then displayed in large as illustrated in FIGS. 25 and 26. The service member can activate a Play button such that video playback starts on the TV, as illustrated in FIG. 27. The Play button toggles to a Pause button. The service member can pause/resume playback via the mobile device. In some embodiments, video does not play on the mobile device. Alternatively, the video plays on the mobile device. When the video is paused, the screen 2500 include a banner that indicates to the service member that the mobile application is connected to the TV. When the video is played, the screen 2600 includes a banner that indicates to the service member that the video is playing on the TV.

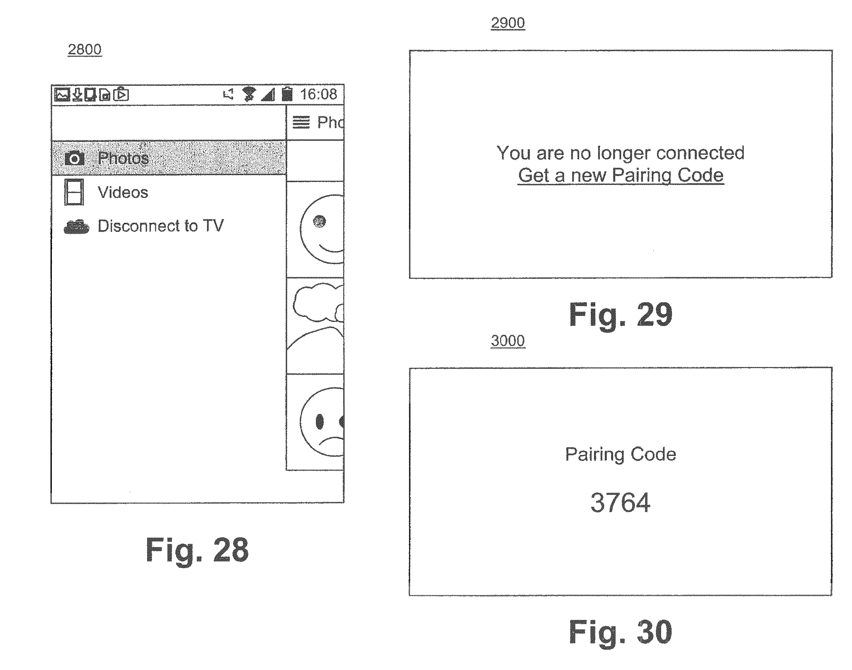

The service member is able to disconnect from TV from the navigation menu screen 2800 of FIG. 28. The navigation menu screen 2800 is similarly configured as the navigation menu screen 1500 of FIG. 15. If the mobile application or TV disconnects from the session, this is indicated in the viewing application, as illustrated in FIG. 29. The service member is able to get a new pairing code from the server by activating a "Get a New Pairing Code" link. The new pairing code is displayed in the viewing application, as illustrated in FIG. 30.

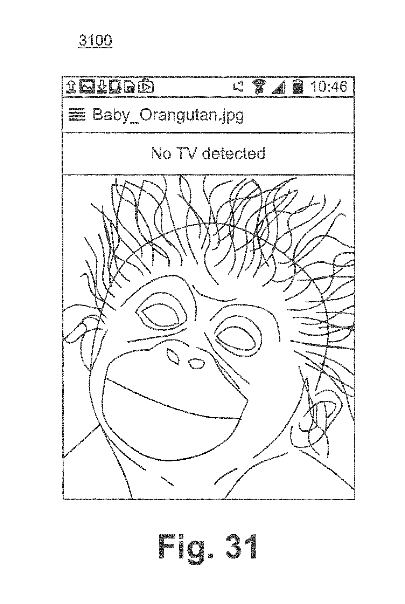

If the TV leaves the session, this is temporarily indicated in the mobile application, as illustrated in FIG. 31, and the mobile application exits TV mode. The exemplary screen 3100 includes a banner that indicates to the service member that no TV is detected. However, the user is able to return to the navigation menu item to reconnect with a viewing device ,at which point the pairing process is repeated.

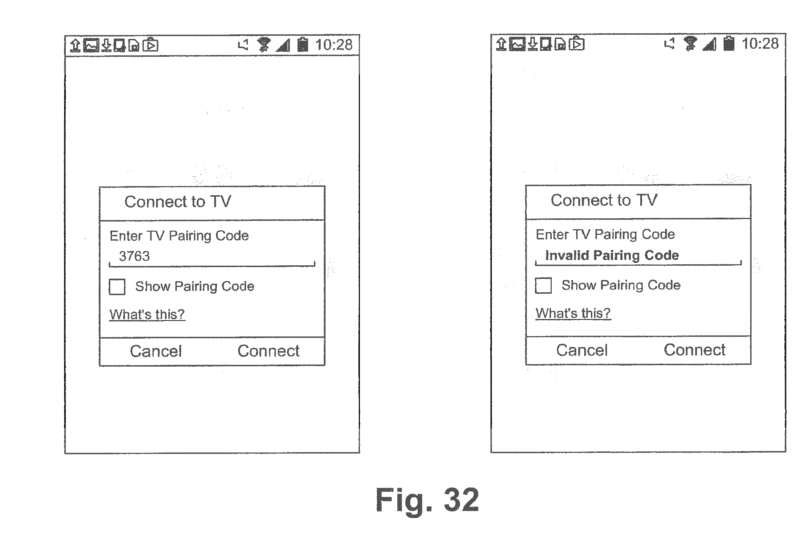

FIGS. 32-34 illustrate exemplary error cases. Particularly, FIG. 32 illustrates a scenario of incorrect pairing code. If the service member enters an invalid pairing code, the service member is informed of this and can re-enter the pairing code. In some embodiments, the error message can be presented as an OS (operating system) pop-up, which can be dismissed by the service member.

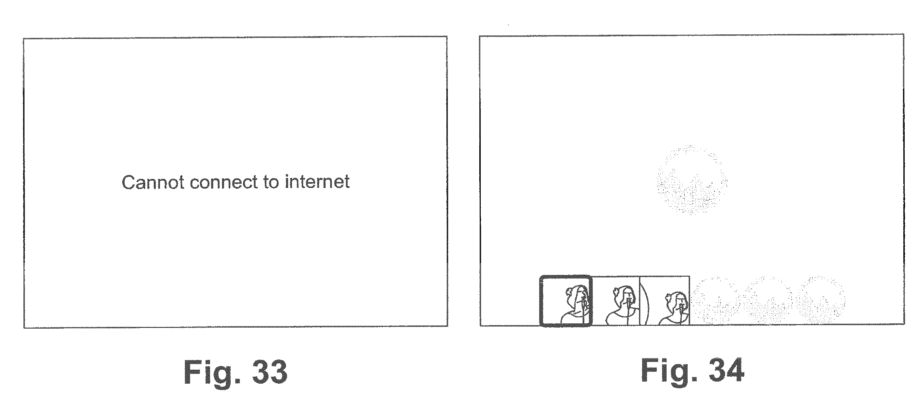

FIG. 33 illustrates a scenario of no Internet connection on the TV. FIG. 34 illustrates a scenario of unavailable content. In FIG. 34, although the TV is connected with the server, content cannot be fetched from the server or the content cannot be displayed on the TV. In some embodiments, a default icon, rather than the content, is displayed.

The present solution provides a unique approach to linking a TV to a person's media account for the purpose of sharing media via the TV. The present solution implements simple standards, such as HTML 5 and Javascript. Unlike prior art solutions, the present invention is not a peer to peer solution. The present solution advantageously simplifies the work needed by the TV and set top box OEMs to support home media sharing by greatly simplifying the linking process. As compared to prior art solutions, the present solution is easier for a customer to use as it allows the customer to access their contents on the TV in a manageable way.

Although the invention has been described with the viewing device and the mobile device being at the same location, the viewing device and the mobile device do not need to be at the same location. In fact, the viewing device and the mobile device do not need to be on the same network. For example, the service member is able to present his/her cloud content to anyone (e.g., a guest) who has a viewing application installed on a viewing device. If the service member is not in the same location as the guest, the service member is able to request the pairing code over the phone or other means.

Furthermore, although the invention has been described as establishing a three-way communication among the computing device, the viewing device and the mobile device, it is contemplated that N viewing devices can be coupled simultaneously. Continuing with the example, the service member is also able to view the cloud content on his/her viewing device at his/her location, while the guest is viewing the cloud content on their viewing device at their location.

It should be noted that although a pairing code has been discussed herein as including any number of typographical symbols, numbers and letters, it is contemplated that the pairing code can include a QR (quick response) code or any two-dimensional barcode. The server is able to generate a QR code to pair devices together. The mobile device is typically QR enabled and can be used to read the QR code displayed on the viewing device. The QR reader can be part of or separate from the mobile application.

One of ordinary skill in the art will realize other uses and advantages also exist. While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A non-transitory computer-readable medium storing instructions that, when executed by a computing device, cause the computing device to perform a method, the method comprising:
enabling establishment of a three-way communication among the computing device, a viewing device and a server, wherein the computing device and the viewing device are end-user devices and the server is located in a cloud;
displaying personal contents stored by the server; and
allowing an user to select at least one of the displayed contents on the computing device such that the at least one displayed content is shown on the viewing device.

2. The non-transitory computer-readable medium of Claim 1, wherein the computing device is a mobile device, and the viewing device is a smart TV, and wherein the mobile device is one of a smart phone and a tablet.

3. The non-transitory computer-readable medium of Claim 1, wherein the enabling includes receiving an user-entered input and transmitting the user-input to the server to be compared with a server-generated pairing code by the server.

4. A non-transitory computer-readable medium storing instructions that, when executed by a computing device, cause the computing device to perform a method, the method comprising:
generating a pairing code to be displayed on a communicatively coupled viewing device;
upon receiving an input entered by an user on a communicatively coupled mobile device that matches the pairing code, establishing a three-way communication among the computing device, the viewing device and the mobile device; and
transmitting at least one personal content that is selected by the user on the mobile device to be displayed on the viewing device.

5. The non-transitory computer-readable medium of Claim 4, wherein the establishing includes linking the viewing device to the same account that the mobile device is linked to.

6. The non-transitory computer-readable medium of Claim 4, further comprising receiving a command from a remote control for the viewing device to control what is displayed on the viewing device.

7. A method of viewing stored contents, the method comprising:
a server generating a pairing code upon communicatively coupling with a viewing device;
the viewing device displaying the pairing code;
the mobile device transmitting an user-entered input to the server;
the server comparing the pairing code with the user-entered input;
based on the comparison, the server establishing a three-way communication among the server, the viewing device and the mobile device;
the mobile device transmitting a selection to the server; and
the viewing device displaying data corresponding to the selection.

8. The method of Claim 7, wherein the selection is one of a folder, a photo, a video, and a song.

9. The method of Claim 7, wherein the data is one of a photo, a video and a song.

10. The method of Claim 7, further comprising:
the mobile device transmitting another selection to the server; and
the viewing device displaying data corresponding to the another selection.

11. A system of viewing remotely stored contents, the system comprising:
at least two-end user devices including a mobile device and a first viewing device; and
a server configured to communicatively couple the mobile device with the first viewing device by linking the first viewing device to an account that the mobile device is linked to such that at least one command sent from the mobile device instructs the server to render a display to be shown on the first viewing device.

12. The system of Claim 11, wherein the mobile device behaves as a controller for what is being displayed on the first viewing device.

13. The system of Claim 11, wherein contents stored by the server are displayed on the mobile device, and wherein the display includes at least one of the contents, and wherein the at least one of the contents is not on the mobile device.

14. The system of Claim 11, wherein the server is configured to generate a pairing code, and wherein the first viewing device is linked to the account via the pairing code.

15. The system of Claim 11, further comprising:
a viewing application on the first viewing device, wherein when the viewing application is executed, cause the first viewing device to communicatively couple with the server and to display data received from the server;
a mobile application on the mobile device, wherein when the mobile application is executed, cause the mobile device to communicatively couple with the server and to send at least one command to the server; and
a server-side application on the server, wherein when the server-side application is executed, cause the server to generate a pairing code and to render, according to the at least one command, a display to be shown within the viewing application.
